Europäisches Patentamt

European Patent Office

Office européen des brevets

(19)

(11) Publication number: **0 315 403**

**A1**

(12) **EUROPEAN PATENT APPLICATION**

(21) Application number: 88310257.6

(22) Date of filing: 01.11.88

(51) Int. Cl.4: **B65G 65/46 , B01F 7/24**

(30) Priority: 05.11.87 FI 874889

(43) Date of publication of application:
10.05.89 Bulletin 89/19

(84) Designated Contracting States:
DE FR SE

(71) Applicant: **A. Ahlström Corporation**

**SF-29600 Noormarkku(FI)**

(72) Inventor: **Kilpeläinen, Ossi**
**Heikinpohjantie 29 B 3**
**SF-57100 Savonlinna(FI)**

(74) Representative: **Gilmour, David Cedric**
**Franklyn et al**
**POTTS, KERR & CO. 15 Hamilton Square**
**Birkenhead Merseyside L41 6BR(GB)**

(54) **Feed and discharge apparatus for silos.**

(57) The present invention relates to an apparatus for feeding material into a silo (1) and for discharging it therefrom, comprising an upwardly extending screw conveyor (30) having an upper discharge end (16) which is at a higher level than that of distributor means (11, 15, 27) provided for distributing material being introduced into the silo. The conveying screw (19) of the screw conveyor is disposed in a vertical duct or pipe (2) rotatably arranged in the silo. The distributor means comprises a feed plate (11) attached to the upper end of the pipe (2). A spiral-shaped discharge arm (26) attached to the lower end of the pipe (2) conveys material on the bottom (4) of the silo towards the opening (3) at the lower end of the pipe (2). A horizontal screw conveyor (13) at the upper part of the silo conveys the material to the opening (15) above the feed plate. The material being discharged from the silo is taken away by the same horizontal screw conveyor (13).

FIG. 1

## Feed and discharge apparatus for silos

The present invention relates to an apparatus for feeding material such as fiber pulp, chips, peat or other loose material of the like into a silo and for removing such material therefrom, said apparatus including a vertical screw conveyor, which comprises a pipe centrally disposed in the silo, the lower end of said pipe being provided with a discharge opening for the material stored in the silo, and a conveying screw rotatably disposed in said pipe; discharge means being provided for transferring or guiding material stored in the silo towards the discharge opening, and distributor means for spreading the material introduced into the silo over the cross section thereof.

A drawback of earlier known feed and discharge means for silos as disclosed, for example, in Patent Application DE 2315831, is that the material to be stored in the silo is introduced into the upper part of the silo and discharged from the lower part thereof. The conveyors introducing material into the silo and taking away material therefrom are, therefore, at different levels and a separate conveying system is needed for the circulation of the material present in the silo.

The object of the present invention is to provide an improvement to the apparatus of the type disclosed in the above-mentioned Application DE 2315831.

The invention is characterized in that the discharge end of the vertical screw conveyor is disposed above the level of the distributor means. Thus, the material to be fed into the silo may be transported onto the distributor means by the same conveyor, a little farther onto which the material, after having passed through the silo, is dropped by the vertical screw. Hence, the conveyor system is simplified and the by-passing as well as the circulation of the material are easy to arrange. The silo is easy to locate because the conveyors for feeding material into the silo and for withdrawing material therefrom may be on the same level.

In accordance with a preferred embodiment of the invention, the outer pipe of the vertical screw is rotatably disposed in the silo and the distributor means comprises a feed plate attached to the pipe, with the distance from the outer edge to the center of said plate varying so that the entering material is spread evenly over the cross section of the silo. The plate may be, for example, quadrangular or eccentric.

The discharge means comprises a spiral-formed arm attached to the pipe and displaceable along the bottom of the silo, which arm removes material evenly from the lower part of the silo.

The invention will be described more in detail below, by way of example, with reference to the accompanying drawings, in which

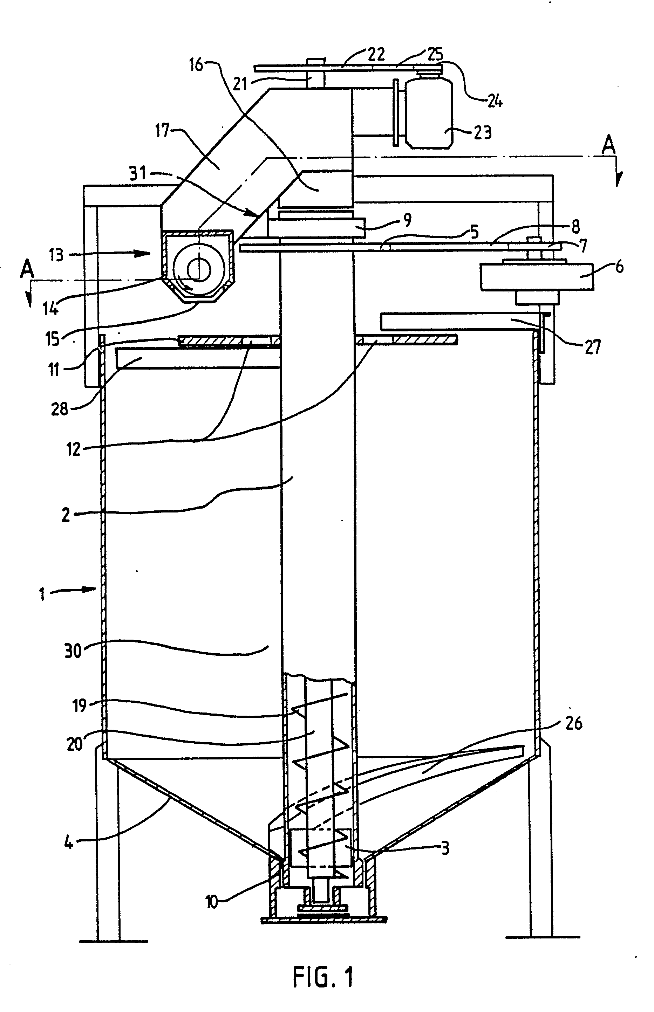

Fig. 1 is a partially sectionalized elevation of a silo according to the invention, and

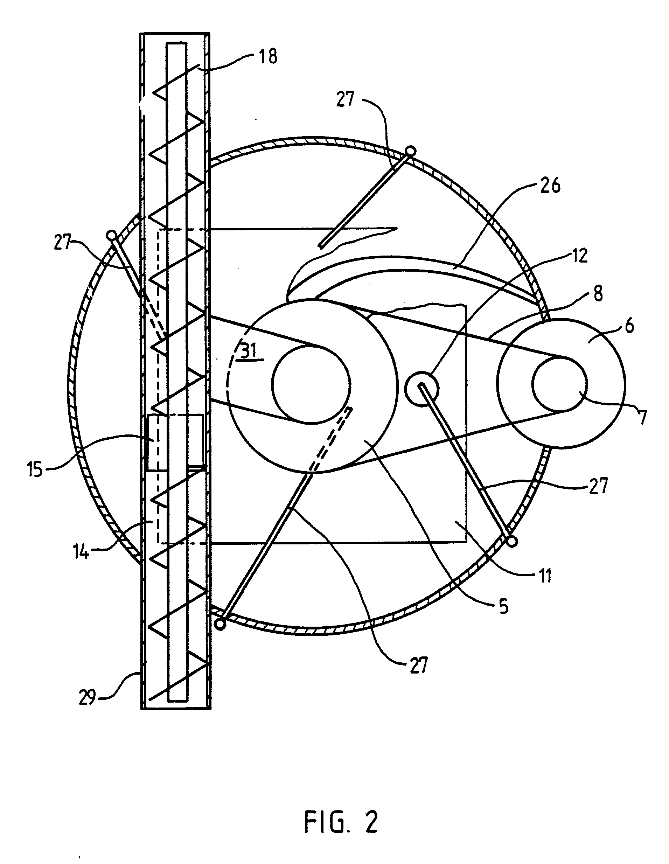

Fig. 2 is a section taken along line A-A of Fig. 1.

A cylindrical silo 1 is illustrated with a vertical pipe 2 disposed rotatably in the middle of the silo. The lower end of the vertical pipe is provided with an opening 3 disposed at the lowest point of the tapered bottom 4 of the silo. The vertical pipe may be rotated by means of a chain wheel 5 attached to the upper end of the pipe, a chain wheel 7 mounted on the shaft of a motor 6 disposed outside of the silo, and a chain 8. The upper and lower ends of the vertical pipe are mounted in bearings 9 and 10. At the upper end of the vertical pipe is disposed a quadrangular feed plate 11, which is illustated as a rectangle and is in fact a square, feed plate 11 being provided with openings 12 at various distances from the center of said plate. The upper part of the silo above the feed plate is equipped with a substantially horizontal screw conveyor 13, the housing of chute 14 of which is provided with a feed opening 15 near the feed plate 11. Above the upper end of the vertical pipe 2 there is disposed an extension piece 16, which is attached to the body of the silo. The extension piece is in communication with the chute 14 of the screw conveyor 13 through a channel 17. At the other end of the chute 14 a discharge opening 18 is disposed.

The vertical pipe 2 is provided with a rotatable conveying screw 19, the upper end of which is disposed in the extension piece 16, said extension pipe forming the discharge end of a vertical screw conveyor 30 formed by pipe 2 and screw 19. The lower end of the screw is disposed near the opening 3 in the pipe, said opening 3 serving as the inlet opening of the vertical screw conveyor. The drive equipment of the screw comprises a belt pulley 22 mounted on the upper end of the shaft 20 of the screw, a motor 23 connected to the extension piece, a belt pulley 24 mounted on the motor shaft and a belt 25.

Attached to the lower end of the vertical pipe is a spiral-formed rotary discharge arm 26 movable along the surface of the bottom 4 of the silo, which arm, while rotating, pushes or guides the material stored in the silo towards the opening 3 at the lower end of the pipe 2.

Above the feed plate 11 are disposed doctors 27 of different lengths, which scrape the top surface of the plate 11. Below the plate 11 is attached a substantially radial blade 28. The material to be fed into the silo is taken to the inlet end 29 of the horizontal screw conveyor 13 disposed at the upper part of the the silo 1 by a conveyor which is not shown. The material displaced by screw conveyor 13 drops through the feed opening 15 in the housing of chute of the screw conveyor 13 onto the feed plate 11 disposed below said opening, wherefrom part of the material flows directly over the edge and through the openings 12 of said plate. The doctors 27 scrape respective and adjustable portions of the remaining material on the plate over the edge of the the plate to form stacks in the silo. Because of the shape of the plate and the radial, consequently changing distance between the edge and the center of the plate, the stacks are oblong. The doctor ends also scrape material through the openings 12 in the plate to the stacks inside the silo. The stacks formed under the openings are also oblong because of the rotation of the plate. The shape of the plate and the size and location of the openings are chosen so as to divide the material into several small stacks, each being of the same height over the entire cross section of the silo. The blade or blades 28 on the underside of the feed plate further scrape the tops of the stacks thereby smoothing the surface when it has reached its maximum.

The discharge arm 26 is so shaped that in the lower part of the silo, it cuts a layer having the same thickness throughout the whole bottom of the silo, thus creating almost an ideal plug flow in the silo, which is desirable when the silo serves, for example, as a process device, where a strictly defined agent, such as a bleaching chemical, is dosed into the pulp. Because of the plug flow, it is possible to exactly define the retention time thus minimizing the amount of chemicals used.

When the discharge means rotates, the material moves in front of the discharge arm 26 towards the center of the silo and enters the inlet opening 3 of the vertical screw conveyor 30, whereafter it is raised by the conveying screw 19 and discharged through the opening at the discharge end of the vertical screw conveyor to the channel 17, where it flows along the bottom 31 of the channel, said bottom slanting towards the horizontal screw conveyor 13, to said horizontal screw conveyor 13, which conveys it to the discharge opening 18 disposed at the end thereof, wherefrom it is transferred to the next stage of the process.

When the silo serves as an equalizer or storage silo, for example, it can be by-passed by stopping the discharge means and the feed plate, whereby the upper level of the material on the feed plate rises up to the inlet opening 15 in the chute of the horizontal screw conveyor, whereafter the material entering the screw conveyor continues over the opening 15 in the chute and is discharged through the opening 18 at the other end thereof.

If other process equipment has to be stopped because of a disturbance or for some other reason, the material contained in the silo can be circulated therein in order to prevent, for example, the material from becoming stuck. It is possible to circulate the material continuously during the stoppage or intermittently during the stoppage without disturbing the process or the repairs under way. The circulation is effected by rotating the conveying screw in the opposite direction, whereby the material raised by the vertical screw is dropped through the feed opening 15 onto the feed plate and is discharged to the silo. Alternatively, the chute can be provided with an opening which is closed by a plate near the channel 17. In this case the circulation is effected by opening said plate.

It will be understood that the above description of the invention and the embodiment illustrated in the drawings only give an example and that many variations are possible within the accompanying claims.

## Claims

1. An apparatus for feeding material into a silo (1) and for discharging it therefrom, including an upwardly extending or vertical screw conveyor (30), which comprises a tube or pipe (2) disposed centrally in the silo, the lower end of said pipe being provided with a discharge opening (3) for the material stored in the silo, and a conveying screw (19) disposed rotatably in said pipe, discharge means (26) for transferring material stored in the silo towards said discharge opening and distributor means (11, 15, 27) for spreading the material introduced into the silo over the cross section thereof, **characterized** in that the discharge end (16) of the vertical screw conveyor (30) is disposed above the level of the distributor means (11, 15, 27).

2. An apparatus as claimed in claim 1, **characterized** in that the vertical pipe (2) is rotatably disposed in the silo (1).

3. An apparatus as claimed in claim 2, **characterized** in that the distributor means comprises a feed plate (11) attached to the upper part of the rotatable, vertical pipe (2).

4. An apparatus as claimed in claim 3, **characterized** in that the radial distance between the outer edge and the center of the feed plate (11) is not constant.

5. An apparatus as claimed in claim 4, **characterized** in that the feed plate (11) is quadrangular, rectangular or square.

6. An apparatus as claimed in claim 4, **characterized** in that the feed plate (11) is eccentric.

7. An apparatus as claimed in any of the claims 3, 4, 5 or 6, **characterized** in that the feed plate (11) is provided with openings (12) at various distances from its center.

8. An apparatus as claimed in claim 2, **characterized** in that the discharge means comprises a rotatable, spiral-formed arm (26) attached to the pipe (2) and movable along the bottom of the silo.

9. An apparatus as claimed in claim 1 or 8, **characterized** in that the bottom (4) of the silo is tapered downwardly.

10. An apparatus as claimed in claim 3, **characterized** in that, above the feed plate (11) there is disposed a substantially horizontal screw conveyor (13) for feeding and discharging material, the housing or chute (14) of which conveyor is provided with a feed opening (15), disposed above the feed plate (11).

11. An apparatus as claimed in claim 10, **characterized** in that, between the discharge end (16) of the vertical screw conveyor (30) and the horizontal screw conveyor (13) there is a flow surface (31) inclined downwardly towards the horizontal screw conveyor.

12. An apparatus as claimed in any of the claims 3 to 7, **characterized** in that the silo is provided with doctors (27) for scraping the top surface of the feed plate (11).

13. An apparatus as claimed in any of the claims 3 to 7 or 12, **characterized** in that the underside of the feed plate (11) is provided with a spreader blade (28) or like member.

EP 0 315 403 A1

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A- 773 497 (G.J. THORDAHL) * Page 2, lines 55-74; figures * | 1 | B 65 G 65/46 B 01 F 7/24 |
| A | | 3 | |
| Y | DE-B-1 291 186 (ETABLISSEMENTS LAW) * Column 3, line 45 - column 4, line 8; figures * | 1 | |
| A | | 10,11 | |
| A | DE-A-2 618 643 (VERFAHRENSTECHNIK HÜBERS KG) * Page 8, lines 4-17; figures * | 1,2,8 | |
| A | DE-A-1 809 197 (HITACHI LTD) * Claims 1,2 * | 3,4,5,6 ,13 | |
| A | US-A-2 860 790 (H.E. ERICKSON et al.) * Claim 1; figures * | 3,12 | |

TECHNICAL FIELDS
SEARCHED (Int. Cl.4)

B 65 G
B 01 F

The present search report has been drawn up for all claims

| Place of search | Date of completion of the search | Examiner |
|---|---|---|
| THE HAGUE | 13-01-1989 | VAN ROLLEGHEM F.M. |